# EUROPEAN PATENT APPLICATION

(11) **EP 4 480 701 A2**
(43) Date of publication of application: **25.12.2024**
(21) Application number: 24211079.9
(22) Date of filing: 21.12.2021
(51) Int. Cl.: B32B 27/30

(54) **HIGH-DISINTEGRATION MULTILAYER BIODEGRADABLE FILM**

(30) Priority: 29.12.2020 IT 202000032663
(62) Divisional of application: 21840965.4
(71) Applicant: Novamont S.p.A., 28100 Novara (IT)
(72) Inventor: BASTIOLI, Catia, 28100 Novara (IT); GESTI GARCIA, Sebastià, 10100 Torino (IT); INGUI', Pier Simone, 28100 Novara (IT); MILIZIA, Tiziana, 28100 Novara (IT); RUSSO, Claudio, 28100 Novara (IT); VALLERO, Roberto, 13040 Borgo D'Ale (VC) (IT)
(74) Representative: Zanoli, Enrico

(57) **Abstract**

Multilayer biodegradable film particularly suitable for use in the manufacture of packaging, comprising at least one layer (A) comprising at least one aliphatic-aromatic biodegradable polyester blended with an aliphatic polyester having at least 70% in moles of succinic acid, and at least one layer (B) comprising a polymer composition comprising an aliphatic-aromatic polymer. The film has high mechanical properties, in particular a high elastic modulus, and appreciable optical transparency properties.

## Description

The present invention relates to a multilayer biodegradable film particularly suitable for use in the manufacture of various types of packaging, in particular bags for the transport of goods and bags for food packaging such as bags for fruit and vegetables. Such films, besides having high mechanical properties, in particular a high elastic modulus, have appreciable optical transparency properties.

The production of packaging, in particular bags for food packaging such as fruit and vegetable bags, requires the use of films which combine good mechanical properties with other positive properties for the consumer, such as in particular optical transparency properties which allow consumers to make use of the packaging through identifying an object contained inside from the outside.

In the field of biodegradable packaging, in addition to the mechanical and optical problems, there is also the need to use materials that are able to degrade once they have reached the end of their primary use without giving rise to the accumulation of waste in the environment. The development of biodegradable films combining these different properties is indeed a challenge that requires that different, often very inconsistent, requirements are balanced. In fact, although particular standards of mechanical properties and biodegradability can be achieved by making use of material compositions that share each of the final film properties according to their different characteristics, achieving high optical transparency properties is very often specifically hindered by the heterogeneous nature of said compositions. For manufacturers of films for biodegradable packaging this means that they have to decide whether to use a film with high mechanical and biodegradability properties and suboptimal optical transparency properties, or vice versa to make use of aspects associated with the optical properties of the packaging, thus accepting lower performance in terms of mechanical and biodegradability properties.

The Applicant has already found compositions that achieve an excellent balance between optical properties, mechanical properties and high biodegradability. Two patent applications WO2017216150 and WO2017216158 need to be considered in this respect.

In particular, WO 2017216150 describes a multilayer film comprising at least a first layer A and at least a second layer B, in which layer A and layer B are different from each other, in which the layer A comprises at least one aliphatic biodegradable polyester and at least one aliphatic-aromatic polyester, and in which layer B comprises essentially an aromatic aliphatic polyester, a natural polymer such as starch, and a polyhydroxyalkanoate.

Although the multilayer film described in WO 2017216150 has extraordinarily good mechanical and optical properties, and is biodegradable under both industrial and home composting conditions according to UNI 11355, further formulation improvements have been made to make said multilayer film able to disintegrate even faster.

Home composting consists of sorting home and garden organic waste and activating its conversion into compost, through a composter with aeration holes and removable lids located in a garden, vegetable garden or on land. It is known that disintegration rate is a particularly important characteristic for a biodegradable polymer because it can ensure composting cycles with shorter times, increasing the compost productivity. This aspect is particularly preferred under home composting conditions (T=28°C) where the disintegration kinetics are slowed down in comparison with industrial composting (performed at T=58°C).

Thus the object of the present invention is a multilayer film comprising at least a first layer A and at least a second layer B, in which layer A comprises:
(i) 97 - 60% by weight, in relation to the sum of components **i.-v.,** of at least one aliphatic/aromatic polyester comprising
   (a) a dicarboxylic component comprising, in relation to the total dicarboxylic component
      (a1) 30-70% in moles, preferably 40-60% in moles, of units derived from at least one aromatic dicarboxylic acid;
      (a2) 70-30% in moles, preferably 60-40% in moles, of units derived from at least one saturated aliphatic dicarboxylic acid;
      (a3) 0 to 5% in moles of units derived from at least one unsaturated aliphatic dicarboxylic acid;
   (b) a diol component comprising, in relation to the total diol component
      (b1) 95-100% in moles of units derived from at least one saturated aliphatic diol;
      (b2) 0-5% in moles of units derived from at least one unsaturated aliphatic diol.
(ii) 3 - 40% by weight, in relation to the sum of components **i.-v.,** of at least one aliphatic polyester comprising
   (c) a dicarboxylic component comprising in relation to the total dicarboxylic component:
      (c1) 70-97% in moles of units derived from succinic acid;
      (c2) 3-30% in moles of units derived from at least one saturated dicarboxylic acid other than succinic acid;
   (d) a diol component comprising, in relation to the total diol component
      (d1) 95-100% in moles of units derived from at least one saturated aliphatic diol;
      (d2) 0-5% in moles of units derived from at least one unsaturated aliphatic diol;
(iii) 0 - 37% by weight, in relation to the sum of components **i.-v.,** of at least one polyhydroxyalkanoate;
(iv) 0 to 10% by weight, in relation to the sum of components **i.-v.,** of at least one inorganic filler;
(v) 0 - 5% by weight, in relation to the sum of components **i.-v.,** of at least one crosslinking agent and/or chain extender comprising at least one di- and/or polyfunctional compound having groups selected from isocyanate, peroxide, carbodiimide, isocyanurate, oxazoline, epoxide, anhydride, divinylether and mixtures thereof; with the proviso that if component iii. is equal to 0, then component iv. must be greater than 0, preferably between 0.1 and 8%, even more preferably between 3 and 5% and component (i) must be comprised between 96,9% and 60% in relation to components **i.-v.,**
and in which layer B includes:
(vi) 99.9 - 50% by weight, in relation to the sum of components vi.-x., of at least one aliphatic-aromatic polyester comprising:
   (e) a dicarboxylic component comprising, in relation to the total dicarboxylic component:
      (e1) 30 to 70% in moles of units derived from at least one aromatic dicarboxylic acid;
      (e2) 70-30% in moles of units derived from at least one saturated aliphatic dicarboxylic acid;
      (e3) 0 to 5% in moles of units derived from at least one unsaturated aliphatic dicarboxylic acid;
   (f) a diol component comprising, in relation to the total diol component:
      (f1) 95-100% in moles of units derived from at least one saturated aliphatic diol;
      (f2) 0-5% in moles of units derived from at least one unsaturated aliphatic diol;
(vii) 0.1 - 50% by weight, in relation to the sum of components vi.-x., of at least one polymer of natural origin;
(viii) 0 to 40% by weight, in relation to the sum of components vi.-x., of at least one polyhydroxyalkanoate;
(ix) 0 - 15% by weight, in relation to the sum of components vi.-x., of at least one inorganic filler;
(x) 0 - 5% by weight, relative to the sum of components vi.-x., of at least one crosslinking agent and/or chain extender comprising at least one di- and/or polyfunctional compound having groups selected from isocyanate, peroxide, carbodiimide, isocyanurate, oxazoline, epoxide, anhydride, divinylether and mixtures thereof.

A particular feature of the multilayer film according to the present invention is that its layered structure comprises at least one layer (layer A) comprising at least one biodegradable aliphatic-aromatic polyester (component i) blended with an aliphatic polyester (component ii, from 3 to 40% by weight, in relation to the sum of components i.-v. in layer A) with at least 70% in moles of succinic acid and at least one layer (layer B) comprising a polymer composition comprising an aliphatic aromatic polymer optionally blended with a polyhydroxyalkanoate portion (component viii, from 0 to 40% by weight, relative to the sum of the components of layer B) and a natural polymer (component vii, from 0.1 to 50% by weight, relative to the sum of the components of layer B).

Surprisingly, it has been found that a multilayer film having this combination of materials has extraordinarily good mechanical properties, biodegradability and optical properties, making it suitable for the production of packaging of various kinds. But above all, the combination of layer A and layer B according to the present invention is such as to make disintegration of the film extremely fast in industrial composting conditions and more preferably in home composting according to UNI 11355. Said film also has high-level mechanical properties and is extremely thin; if, for example, in the form of bags of height no more than 50 cm, width no more than 40 cm (with or without gussets) and, in the case of bags having handles, of width between 6.5 and 4 cm, and a thickness of less than 15 µm and more preferably less than 13 µm, the bags are capable of supporting a weight of at least 3 kg, and even more preferably at least 4 kg under dynamic type test conditions.

By way of example, a test of the dynamic type may comprise placing and lifting the bag 40 cm above the ground for 10 consecutive times without any tearing. The multilayer film according to the present invention has optical properties similar to those of the aforementioned patent application WO 2017216150, while increasing the biodegradability characteristics of the multilayer film. In particular, with reference to a film of thickness less than 13 m, the multilayer film has optical transmission properties greater than 90%, preferably greater than 91%, Haze (haziness) of less than 65%, preferably less than 45%, and clarity (sharpness) greater than 20%, preferably greater than 40%, even more preferably greater than 55% (measured according to ASTM D1003).

The present invention also relates to packaging of various kinds, in particular bags for transporting goods and bags for food packaging such as bags for food and vegetables comprising said multilayer film. Said multilayer film is also particularly suitable in the field of mulching sheets.

The multilayer film according to the present invention comprises at least one layer A and at least one layer B, preferably characterised by a mutual arrangement chosen from A / B and A/B/A.

### LAYER A

As for layer A, this comprises at least one aliphatic polyester and at least one aliphatic-aromatic polyester comprising:
i) 97 - 60% by weight, relative to the sum of components **i.-v.,** of at least one aliphatic/aromatic polyester comprising
   (a) a dicarboxylic component comprising, in relation to the total dicarboxylic component
      (a1) 30-70% in moles, preferably 40-60% in moles, of units derived from at least one aromatic dicarboxylic acid;
      (a2) 70-30% in moles, preferably 60-40% in moles, of units derived from at least one saturated aliphatic dicarboxylic acid;
      (a3) 0 to 5% in moles of units derived from at least one unsaturated aliphatic dicarboxylic acid;
   (b) a diol component comprising, in relation to the total diol component
      (b1) 95-100% in moles of units derived from at least one saturated aliphatic diol;
      (b2) 0-5% in moles of units derived from at least one unsaturated aliphatic diol.
ii) 3 - 40% by weight, in relation to the sum of components **i.-v.,** of at least one aliphatic polyester comprising
   (c) a dicarboxylic component comprising in relation to the total dicarboxylic component:
      (c1) 70-97% in moles of units derived from succinic acid;
      (c2) 3-30% in moles of units derived from at least one saturated dicarboxylic acid other than succinic acid;
   (d) a diol component comprising, in relation to the total diol component:
      (d1) 95-100% in moles of units derived from at least one saturated aliphatic diol;
      (d2) 0-5% in moles of units derived from at least one unsaturated aliphatic diol;
(iii) 0 to 37% by weight, in relation to the sum of components **i.-v.,** of at least one polyhydroxyalkanoate;
(iv) 0 to 10% by weight, in relation to the sum of components **i.-v.,** of at least one inorganic filler.
(v) 0 to 5% by weight, in relation to the sum of components **i.-v.,** of at least one crosslinking agent and/or chain extender comprising at least one di- and/or polyfunctional compound bearing groups selected from among isocyanate, peroxide, carbodiimide, isocyanurate, oxazoline, epoxide, anhydride, divinylether, and mixtures thereof;
with the proviso that if component iii. is equal to 0, then component iv. must be greater than 0, preferably between 0.1 and 8%, even more preferably between 3 and 5% and component (i) must be comprised between 96,9% and 60% in relation to components **i.-v.**

As for component i. in layer A, this comprises from 97 to 60% by weight, preferably from between 96,9% and 60% , more preferably from 96% to 70% by weight, even more preferably from 96 to 88% by weight in relation to the sum of components **i.-v.,** of an aliphatic-aromatic polyester.

The aromatic dicarboxylic acids in component a1 are preferably selected from aromatic dicarboxylic acids of the phthalic acid type, preferably terephthalic acid or isophthalic acid, more preferably terephthalic acid and heterocyclic dicarboxylic aromatic compounds, preferably 2,5-furandicarboxylic acid, 2,4-furandicarboxylic acid, 2,3-furandicarboxylic acid, 3,4-furandicarboxylic acid, more preferably 2,5-furandicarboxylic acid, their esters, salts and mixtures.

In a preferred embodiment, said aromatic dicarboxylic acids comprise: 1 to 99% in moles, preferably 5 to 95% and more preferably 10 to 80%, of terephthalic acid, its esters or salts; 99 to 1% in moles, preferably 95 to 5% and more preferably 90 to 20%, of 2,5-furandicarboxylic acid, its esters or salts.

Preferably the saturated aliphatic dicarboxylic acids in component a2 are selected from saturated C2-C24, preferably C4-C13, more preferably C4-C11, dicarboxylic acids, their C1-C24, preferably C1-C4, alkyl esters, their salts and mixtures thereof. Preferably the saturated aliphatic dicarboxylic acids are selected from succinic acid, 2-ethylsuccinic acid, glutaric acid, 2-methylglutaric acid, adipic acid, pimelic acid, suberic acid, azelaic acid, sebacic acid, undecandioic acid, dodecandioic acid, brassylic acid, octadecandioic acid and C1-24 alkyl esters thereof. In a preferred embodiment of this invention the saturated aliphatic dicarboxylic acid comprises mixtures comprising at least 50% in moles, preferably more than 60% in moles, more preferably more than 65% in moles, of succinic acid, adipic acid, azelaic acid, sebacic acid, brassylic acid, their C1-C24, preferably C1-C4, esters, and mixtures thereof. In a particularly preferred embodiment, said mixtures comprise or consist of adipic acid and azelaic acid and contain azelaic acid in an amount of between 5 and 40% in moles, more preferably between 10 and 35% in moles of azelaic acid relative to the sum of adipic acid and azelaic acid.

The unsaturated aliphatic dicarboxylic acids in component **a3** are preferably selected from itaconic acid, fumaric acid, 4-methylene-pimelic acid, 3,4-bis(methylene) nonandioic acid, 5-methylene-nonandioic acid, their C1-C24, preferably C1-C4, alkyl esters, their salts and mixtures thereof. In a preferred embodiment of the present invention the unsaturated aliphatic dicarboxylic acids comprise mixtures comprising at least 50% in moles, preferably more than 60% in moles, more preferably more than 65% in moles, of itaconic acid and its C1-C24, preferably C1-C4, esters. More preferably the unsaturated aliphatic dicarboxylic acids comprise itaconic acid.

As for the saturated aliphatic diols in component **b1,** these are preferably chosen from 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,4-cyclohexanedimethanol, neopentylglycol, 2-methyl-1,3-propanediol, dianhydrosorbitol, dianhydromannitol, dianhydroiditol, cyclohexanediol, cyclohexanmethanediol, dialkylene glycols and polyalkylene glycols of molecular weight 100-4000 such as polyethylene glycol, polypropylene glycol and mixtures thereof. Preferably the diol component comprises at least 50% in moles of one or more diols selected from 1,2-ethanediol, 1,3-propanediol, 1,4-butanediol. More preferably, the diol component comprises or consists of 1,4-butanediol.

As for the unsaturated aliphatic diols in component b2, these are preferably selected from *cis*-2-butene-1,4-diol, *trans*-2-butene-1,4-diol, 2-butyne-1,4-diol, *cis*-2-pentene-1,5-diol, *trans-* 2-pentene-1,5-diol, 2-pentyne-1,5-diol, *cis*-2-hexene-1,6- diol, *trans*-2-hexene-1,6-diol, 2-hexyne-1,6-diol, *cis*-3exene-1,6-diol, *trans*-3-hexene-1,6-diol, 3-hexyne-1,6-diol. The molecular weight Mn of said aliphatic-aromatic polyester in layer A is preferably greater than 20,000, more preferably greater than 40,000. As for the molecular weights polydispersion index, Mw/Mn, this is instead preferably between 1.5 and 10, more preferably between 1.6 and 5, and even more preferably between 1.8 and 2.7.

Molecular weights Mn and Mw may be measured by gel permeation chromatography (GPC). The determination may be performed with the chromatographic system maintained at 40 °C, using a set of two columns in series (particle diameter 5 µm and 3 µm with mixed porosity), a refractive index detector, chloroform as eluent (flow rate 0.5 ml/min) and using polystyrene as reference standard.

Preferably, said aliphatic-aromatic polyester in layer A has an intrinsic viscosity of greater than 0.3 dl/g (measured using an Ubbelohde viscosity meter for solutions of concentration 0.2 g/dl in CHCl3 at 25°C), preferably between 0.3 and 2 dl/g, more preferably between 0.4 and 1.2 dl/g.

The terminal acid groups content of said aliphatic-aromatic polyester in layer A is preferably less than 100 meq/kg, preferably less than 60 meq/kg and even more preferably less than 40 meq/kg.

The terminal acid groups content may be measured as is known in the art, for example as disclosed in WO2017216150.

Said aliphatic-aromatic polyester in layer A is biodegradable. In the meaning of the present invention, biodegradable polymer means a polymer which is biodegradable according to EN 13432.

Said aliphatic-aromatic polyester in layer A may be synthesised according to any of the processes known in the state of the art. In particular, it may advantageously be obtained using a polycondensation reaction.

Advantageously, the synthesis process may be carried out in the presence of a suitable catalyst. As suitable catalysts, mention may be made of, for example, organometallic tin compounds, e.g. stannic acid derivatives, titanium compounds, e.g. orthobutyl titanate, aluminium compounds, e.g. triisopropyl aluminium, antimony and zinc compounds, and zirconium compounds and mixtures thereof.

As regards component **ii.** of layer A it comprises from 3 to 30% by weight, preferably from 4 to 25% by weight, even more preferably from 4 to 12% by weight in relation to the sum of components **i.-v.,** of an aliphatic polyester comprising a dicarboxylic component comprising from 70 to 97% in moles in relation to the total of the dicarboxylic component of units derived from succinic acid, preferably between 70% and 90%, even more preferably between 72% and 82% (component c1) and from 3 to 30% in moles of units derived from at least one saturated dicarboxylic acid other than succinic acid, preferably between 10% and 30% (component c2).

The saturated aliphatic dicarboxylic acids other than succinic acid in component c2 are preferably selected from C5-C24, preferably C5-C13, more preferably C7-C11, saturated dicarboxylic acids, C1-C24, preferably C1-C4, alkyl esters thereof, their salts and mixtures. Preferably, the saturated aliphatic dicarboxylic acids are selected from: succinic acid (c1 component), 2-ethylsuccinic acid, glutaric acid, 2-methylglutaric acid, adipic acid, pimelic acid, suberic acid, azelaic acid, sebacic acid, undecandioic acid, dodecandioic acid, brassylic acid, and C1-24 alkyl esters thereof. In a particularly preferred aspect of the invention the c2 component is azelaic acid.

As for diol component d, it comprises the saturated aliphatic components d1 and unsaturated aliphatic components d2.

As for the saturated aliphatic diols in component d1, these are preferably chosen from 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,4-cyclohexanedimethanol, neopentylglycol, 2-methyl-1,3-propanediol, dianhydrosorbitol, dianhydromannitol, dianhydroiditol, cyclohexanediol, cyclohexanmethanediol, dialkylene glycols and polyalkylene glycols with molecular weight 100-4000 such as polyethylene glycol, polypropylene glycol and mixtures thereof. Preferably the diol component comprises at least 50% in moles of one or more diols selected from 1,2-ethanediol, 1,3-propanediol, 1,4-butanediol. More preferably, the diol component comprises or consists of 1,4-butanediol. As for the unsaturated aliphatic diols in component d2, these are preferably selected from *cis*-2-butene-1,4-diol, *trans*-2-butene-1,4-diol, 2-butyne-1,4-diol, *cis*-2-pentene-1,5 diol, *trans*-2-pentene-1,5-diol, 2-pentyne-1,5-diol, *cis*-2-hexene-1,6-diol, *trans*-hexene-1,6-diol, 2-hexyne 1,6-diol, *cis*-3-hexene-1,6-diol, *trans*-3-hexene-1,6-diol, 3-hexyne-1,6-diol.

The molecular weight Mn of said aliphatic polyester ii. of layer A is preferably greater than 20,000, more preferably greater than 40,000. As for the molecular weights polydispersity index Mw/Mn, this is instead preferably between 1.5 and 10, more preferably between 1.6 and 5 and even more preferably between 1.8 and 2.7.

Molecular weights Mn and Mw may be measured by Gel Permeation Chromatography (GPC). The determination may be carried out with the chromatographic system maintained at 40 °C, using a set of two columns in series (particle diameters of 5 µm and 3 µm with mixed porosity), a refractive index detector, chloroform as eluent (flow rate 0.5 ml/min) and using polystyrene as reference standard.

Preferably, said aliphatic polyester ii. has an inherent viscosity (measured with an Ubbelohde viscometer for solutions in CHCl3 of concentration 0.2 g/dl at 25 °C) greater than 0.3 dl/g, preferably between 0.3 and 2 dl/g, more preferably between 0.4 and 1.4 dl/g.

The terminal acid groups content of said aliphatic polyester ii. is preferably between 30 and 160 meq/kg.

The terminal acid groups content may be measured as is known in the art, for example as is disclosed in WO2017216150.

Said aliphatic polyester ii. may be synthesised according to any of the processes known in the state of the art. In particular it may advantageously be obtained by a polycondensation reaction.

Advantageously, the synthesis process may be conducted in the presence of a suitable catalyst. As suitable catalysts, mention may be made, by way of example, of organometallic tin compounds, for example stannoic acid derivatives, titanium compounds, for example orthobutyl titanate, aluminium compounds, for example triisopropyl aluminium, antimony and zinc and zirconium compounds and mixtures thereof.

Said aliphatic polyester in layer A (component ii.) is biodegradable. In the meaning of the present invention, a biodegradable polymer means a polymer which is biodegradable according to EN 13432.

As regards component iii. of layer A, it optionally comprises at least one polyhydroxyalkanoate, preferably between 0 and 37%, more preferably between 5 and 37%, even more preferably between 10 and 25% in relation to the sum of components i.-v.

Said polyhydroxyalkanoate is more preferably selected from the group consisting of polyesters of lactic acid, poly-ε-caprolactone, polyhydroxybutyrate, polyhydroxybutyrate-valerate, polyhydroxybutyrate-propanoate, polyhydroxybutyrate-hexanoate, polyhydroxybutyrate-decanoate, polyhydroxybutyrate-dodecanoate, polyhydroxybutyratehexadecanoate, polyhydroxybutyrate-octadecanoate, poly-3-hydroxybutyrate-4-hydroxybutyrate. Preferably said polyhydroxyalkanoate comprises at least 80% by weight of one or more polyesters of lactic acid.

In a preferred embodiment, the lactic acid polyesters are selected from the group consisting of poly-L-lactic acid, poly-D-lactic acid, poly-DL-lactic acid stereo complex, copolymers comprising more than 50% in moles of said lactic acid polyesters or mixtures thereof. Particularly preferred are lactic acid polyesters containing at least 95% by weight of repeating units derived from L-lactic or D-lactic acid or mixtures thereof, having a molecular weight Mw greater than 50,000 and a shear viscosity between 50 and 500 Pa.s, preferably 100-300 Pa.s (measured according to ASTM standard D3835 at T = 190°C, shear rate = 1000 s-1, D = 1 mm, L / D = 10).

In a particularly preferred embodiment of the invention the lactic acid polyester comprises at least 95% by weight of units derived from L-lactic acid, <5% repetitive units derived from D-lactic acid, has a melting point in the range 135 to 180°C, a glass transition temperature (Tg) in the range 55-65°C and an MFR (measured according to ISO 1133-1 at 190°C and 2.16 kg) in the range 1-50 g/10 min. Commercial examples of lactic acid polyesters having these properties include, for example, Ingeo^{™} 4043D, 3250D and 6202D biopolymer products.

In the composition of the layer A there is present 0 - 10% by weight, preferably between 0.1 and 8%, even more preferably between 3 and 5% in relation to the sum of the components **i.-v.** of at least one inorganic filler (component iv), which is preferably chosen from kaolin, barytes, clay, talc, calcium and magnesium, iron and lead carbonates, aluminium hydroxide, kieselguhr, aluminium sulfate, barium sulfate, silica, mica, titanium dioxide and wollastonite. In a preferred embodiment of the present invention, the inorganic filler in the composition of layer A comprises talc, mica, calcium carbonate or mixtures thereof, present in the form of particles having an average arithmetic diameter of less than 10 microns measured in relation to the major axis of the particles, more preferably having an average arithmetic diameter of less than 2 microns (measured according to ASTM 13320). Indeed, it has been found that fillers of the above type which are not characterised by said average arithmetic diameter show significantly lower disintegration characteristics during the industrial composting of objects containing them.

If component iii. is equal to 0, then component iv. must be greater than 0, preferably between 0.1 and 8%, even more preferably between 3 and 5% in relation to components **i.-v.**

Also present in the composition of layer A is from 0 to 5% by weight, preferably from 0 to 0.5% by weight, in relation to the sum of components **i.-v.,** of at least one crosslinking agent and/or chain extender to improve stability to hydrolysis (component v.).

Said crosslinking agent and/or chain extender is selected from di- and/or polyfunctional compounds bearing groups chosen from isocyanate, peroxide, carbodiimide, isocyanurate, oxazoline, epoxy, anhydride or divinyl ether or mixtures thereof.

Particularly preferred are mixtures of di- and/or polyfunctional compounds bearing isocyanate groups with di- and/or polyfunctional compounds bearing epoxy groups, even more preferably comprising at least 75% by weight of di- and/or polyfunctional compounds bearing isocyanate groups.

Compounds having two multifunctional groups including isocyanate groups are preferably selected from p-phenylene diisocyanate, 2,4-toluene diisocyanate, 2,6-toluene diisocyanate, 4,4-diphenylmethane-diisocyanate, 1,3-phenylene-4-chloro diisocyanate, 1,5-naphthalene diisocyanate, 4,4-diphenylene diisocyanate, 3,3'-dimethyl-4,4-diphenylmethane diisocyanate, 3-methyl-4,4'-diphenylmethane diisocyanate, diphenylester diisocyanate, 2,4-cyclohexane diisocyanate, 2,3-cyclohexane diisocyanate, 1-methyl-2,4-cyclohexyl diisocyanate, 1-methyl- 2,6-cyclohexyl diisocyanate, bis-(isocyanate cyclohexyl) methane, 2,4,6-toluene triisocyanate, 2,4,4-diphenylether triisocyanate, polymethylene-polyphenyl-polyisocyanates, methylene diphenyl diisocyanate, triphenylmethane triisocyanate, 3,3'ditolylene-4,4-diisocyanate, 4,4'-methylene-bis(2-methyl-phenyl isocyanate), hexamethylene 1,3-cyclohexylene diisocyanate, 1,2-cyclohexylene diisocyanate and mixtures thereof. In a preferred embodiment the compound containing isocyanate groups is 4,4-diphenylmethane-diisocyanate.

As for the di- and polyfunctional compounds bearing peroxide groups, these are preferably selected from benzoyl peroxide, lauroyl peroxide, isononanoyl peroxide, di-(t-butylperoxyisopropyl) benzene, t-butyl peroxide, dicumyl peroxide, alpha,alpha-di(t-butylperoxy)diisopropylbenzene, 2,5-dimethyl-2,5-di(t-butylperoxy) hexane, t-butyl cumyl peroxide, di-t-butyl peroxide, 2,5-dimethyl-2,5-di(t-butylperoxy) hex-3-ynine, di(4-t-butylcyclohexyl) peroxydicarbonate, dicetyl peroxydicarbonate, dimyristyl peroxydicarbonate, 3,6,9-triethyl-3,6,9-trimethyl-1,4,7-triperoxonane, di(2-ethylhexyl) peroxydicarbonate and mixtures thereof.

The di- and polyfunctional compounds bearing carbodiimide groups which are preferably used in the composition according to the present invention are chosen from poly(cyclooctylene carbodiimide), poly(1,4-dimethylenecyclohexylene carbodiimide), poly(cyclohexylene carbodiimide), poly(ethylene carbodiimide), poly(butylene carbodiimide), poly(isobutylene carbodiimide), poly(nonylene carbodiimide), poly(dodecylene carbodiimide), poly(neopentylene carbodiimide), poly (1, 4-dimethylene phenylene carbodiimide), poly (2, 2', 6,6'-tetraisopropyldiphenylene carbodiimide) (Stabaxol <^{®}> D), poly(2,4,6-triisopropyl-1,3-phenylene carbodiimide) (Stabaxol <^{®}> P- 100), poly(2,6-diisopropyl- 1,3-phenylene carbodiimide) (Stabaxol <^{®}> P), poly(tolyl carbodiimide) (Stabaxol <^{®}> P) P), poly (tolyl carbodiimide), poly(4,4'-diphenylmethane carbodiimide), poly(3,3'-dimethyl-4,4'-biphenylene carbodiimide), poly(p-phenylene carbodiimide), poly(m-phenylene carbodiimide), poly(3,3'-dimethyl-4,4'-diphenylmethane carbodiimide), poly(naphthylene carbodiimide), poly(isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12-dodecamethylene bis(ethylcarbodiimide) and mixtures thereof. Examples of di- and polyfunctional compounds bearing epoxy groups which may be advantageously used in the composition according to the present invention are all polyepoxides from epoxidised oils and/or from styrene-glycidyl ether-methyl methacrylate or glycidyl ether-methyl methacrylate within a molecular weight range between 1000 and 10,000 and having an epoxy number per molecule of between 1 and 30 and preferably between 5 and 25, the epoxides selected from the group comprising: diethylene glycol diglycidyl ether, polyethylene glycol diglycidyl ether, polyglycerol polyglycidyl ether, 2-epoxybutane, polyglycerol polyglycidyl ether, isoprene diepoxide and cycloaliphatic diepoxides, 1,4-cyclohexanedimethanol diglycidyl ether, glycidyl 2-methylphenyl ether, propoxylatotriglycolcidyl ether, propoxylatotriglycidyl ether, tetraglycidyl ethers of metaxylenediamine and diglycidyl ether of bisphenol A and mixtures thereof.

Along with di- and polyfunctional compounds bearing isocyanate, peroxide, carbodiimide, isocyanurate, oxazoline, epoxy, anhydride and divinylether groups such as those described above, catalysts may also be used to increase the reactivity of the reactive groups. In the case of polyepoxides, fatty acid salts, even more preferably calcium stearates and zinc stearates, may be used.

In a particularly preferred embodiment of the invention, the crosslinking agent and/or chain extender comprises compounds bearing isocyanate groups, preferably 4,4-diphenylmethane-diisocyanate, and/or bearing carbodiimide groups, and/or bearing epoxy groups, preferably of the styrene - glycidylteremethylmethacrylate type.

### LAYER B

As for layer B, this includes:
(vi) 99.9 - 50% by weight in relation to the sum of components **vi.-x.** of at least one aliphatic-aromatic polyester comprising:
   (e) A dicarboxylic component comprising, in relation to the total dicarboxylic component:
      (e1) 30 to 70% in moles of units derived from at least one aromatic dicarboxylic acid;
      (e2) 70-30% in moles of units derived from at least one saturated aliphatic dicarboxylic acid;
      (e3) 0 to 5% in moles of units derived from at least one unsaturated aliphatic dicarboxylic acid;
   (f) a diol component comprising, in relation to the total diol component
      (f1) 95-100% in moles of units derived from at least one saturated aliphatic diol;
      (f2) 0-5% in moles of units derived from at least one unsaturated aliphatic diol;
(vii) 0.1 - 50% by weight in relation to the sum of components **vi.-x.** of at least one polymer of natural origin;
(viii) 0 to 40% by weight in relation to the sum of components **vi.-x.** of at least one polyhydroxyalkanoate;
(ix) 0 - 15% by weight in relation to the sum of components **vi.-x.** of at least one inorganic filler;
(x) 0 - 5% by weight, relative to the sum of components **vi.-x.** of 0 - 5% by weight of at least one cross-linking agent and/or chain extender comprising at least one di- and/or polyfunctional compound having isocyanate, peroxide, carbodiimide, isocyanurate, oxazoline, epoxy, anhydride or divinylether groups, and mixtures thereof.

As regards component **vi.** of layer B it comprises 99.9 to 50% by weight, preferably 95 to 65% by weight in relation to the sum of components **vi.-x,** of an aliphatic-aromatic polyester. The aromatic dicarboxylic acids in component e1 are preferably selected from aromatic dicarboxylic acids of the phthalic acid type, preferably terephthalic acid or isophthalic acid, more preferably terephthalic acid and heterocyclic aromatic dicarboxylic compounds, preferably 2,5-furandicarboxylic acid, 2,4-furandicarboxylic acid, 2,3-furandicarboxylic acid, 3,4-furandicarboxylic acid, more preferably 2,5-furandicarboxylic acid, their esters, salts and mixtures.

In a preferred embodiment, said aromatic dicarboxylic acids comprise: 1 to 99% in moles, preferably 5 to 95% and more preferably 10 to 80%, of terephthalic acid, its esters or salts; 99 to 1% in moles, preferably 95 to 5% and more preferably 90 to 20%, of 2,5-furandicarboxylic acid, its esters or salts.

Preferably the saturated aliphatic dicarboxylic acids in component e2 are selected from saturated C2-C24, preferably C4-C13, more preferably C4-C11, dicarboxylic acids, their C1-C24, preferably C1-C4, alkyl esters, their salts and mixtures thereof. Preferably the saturated aliphatic dicarboxylic acids are selected from succinic acid, 2-ethylsuccinic acid, glutaric acid, 2-methylglutaric acid, adipic acid, pimelic acid, suberic acid, azelaic acid, sebacic acid, undecandioic acid, dodecandioic acid, brassylic acid, acid, octadecandioic acid and C1-24 alkyl esters thereof. In a preferred embodiment of this invention the saturated aliphatic dicarboxylic acid comprises mixtures comprising at least 50% in moles, preferably more than 60% in moles, more preferably more than 65% in moles, of succinic acid, adipic acid, azelaic acid, sebacic acid, brassylic acid, their C1-C24, preferably C1-C4 esters, and mixtures thereof. In a particularly preferred embodiment, said mixtures comprise or consist of adipic acid and azelaic acid and contain azelaic acid in an amount of between 5 and 70% in moles, more preferably between 10 and 55% in moles, even more preferably between 12 and 45% in moles, of azelaic acid relative to the sum of adipic acid and azelaic acid.

The unsaturated aliphatic dicarboxylic acids in component e3 are preferably selected from itaconic acid, fumaric acid, 4-methylene-pimelic acid, 3,4-bis(methylene) nonandioic acid, 5-methylene-nonandioic acid, their C1-C24, preferably C1-C4, alkyl esters, their salts and mixtures thereof. In a preferred embodiment of the present invention, the unsaturated aliphatic dicarboxylic acids comprise mixtures comprising at least 50% in moles, preferably more than 60% in moles, more preferably more than 65% in moles, of itaconic acid and its C1-C24, preferably C1-C4, esters. More preferably the unsaturated aliphatic dicarboxylic acids comprise itaconic acid.

As for the saturated aliphatic diols in component f1, these are preferably chosen from 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,4-cyclohexanedimethanol, neopentylglycol, 2-methyl-1,3-propanediol, dianhydrosorbitol, dianhydromannitol, dianhydroiditol, cyclohexanediol, cyclohexanmethanediol, dialkylene glycols and polyalkylene glycols of molecular weight 100-4000 such as polyethylene glycol, polypropylene glycol and mixtures thereof. Preferably the diol component comprises at least 50% in moles of one or more diols selected from 1,2-ethanediol, 1,3-propanediol, 1,4-butanediol. More preferably, the diol component comprises or consists of 1,4-butanediol. As for the unsaturated aliphatic diols in component f2, these are preferably selected from *cis*-2-butene-1,4-diol, *trans*-2-butene-1,4-diol, 2-butyne-1,4-diol, *cis*-2-pentene-1,5 diol, *trans*-2-pentene-1,5-diol, 2-pentyne-1,5-diol, *cis*-2-hexene-1,6-diol, *trans*-2-hexene-1,6-diol, 2-hexyne-1,6-diol, *cis*-3-hexene-1,6-diol, *trans*-3-hexene-1,6-diol, 3-hexyne-1,6-diol. The molecular weight Mn of said aliphatic-aromatic polyester in layer B is preferably greater than 20,000, more preferably greater than 40,000. As for the molecular weight polydispersion index, Mw/Mn, this is instead preferably between 1.5 and 10, more preferably between 1.6 and 5, and even more preferably between 1.8 and 2.7.

Molecular weights Mn and Mw may be measured by gel permeation chromatography (GPC). The determination may be performed with the chromatographic system maintained at 40°C, using a set of two columns in series (particle diameter 5 µm and 3 µm with mixed porosity), a refractive index detector, chloroform as eluent (flow rate 0.5 ml/min) and using polystyrene as reference standard.

Preferably, said aliphatic-aromatic polyester in layer B has an intrinsic viscosity greater than 0.3 dl/g (measured using an Ubbelohde viscosity meter for solutions of concentration 0.2 g/dl in CHCl3 at 25°C), preferably between 0.3 and 2 dl/g, more preferably between 0.4 and 1.2 dl/g.

The content of aliphatic-aromatic polyester terminal-acid groups in layer B is preferably less than 100 meq/kg, preferably less than 60 meq/kg and even more preferably less than 40 meq/kg.

The content of terminal acid groups may be measured as is known in the art, for example as disclosed in WO2017216150.

Said aliphatic-aromatic polyester in layer B is biodegradable. In the meaning of the present invention, a biodegradable polymer means a polymer which is biodegradable according to EN 13432.

Said aliphatic-aromatic polyester in layer B may be synthesised according to any of the processes known in the state of the art. In particular, it may advantageously be obtained using a polycondensation reaction.

Advantageously, the synthesis process may be carried out in the presence of a suitable catalyst. As suitable catalysts, mention may be made of, for example, organometallic tin compounds, e.g. stannic acid derivatives, titanium compounds, e.g. orthobutyl titanate, aluminium compounds, e.g. tri-isopropyl aluminium, antimony and zinc compounds, and zirconium compounds and mixtures thereof.

Layer B composition comprises 0.1-50% by weight, preferably 5-35% by weight, relative to the sum of components vi.-x., of at least one polymer of natural origin (component vii). In the composition of layer B, the polymer of natural origin is advantageously selected from starch, chitin, chitosan, alginates, proteins such as gluten, zein, casein, collagen, gelatin, natural gums, rosinic acid and derivatives thereof. Preferably, in the composition of layer B the polymer of natural origin is starch.

By the term starch is meant all types of starch, i.e. flour, native starch, hydrolysed starch, destructured starch, gelatinised starch, plasticised starch, thermoplastic starch, biofiller comprising complexed starch or mixtures thereof. Particularly suitable according to the invention are starches such as those of potatoes, corn, tapioca and peas.

Particularly advantageous are starches that are easily deconstructed or have high initial molecular weights, such as potato starch or corn starch.

Starch may be present as such or in a chemically modified form, such as starch esters with a degree of substitution between 0.2 and 2,5, hydroxypropylated starch or starch modified with fat chains.

In the case of destructured starch, reference is made herein to the teaching included in patents EP-0 118 240 and EP-0 327 505, meaning that such starch is processed so as to be substantially free of so-called "Maltese crosses" under an optical microscope in polarised light and so-called "ghosts" under an optical microscope with phase contrast. Advantageously, the starch is de-structured by an extrusion process at temperatures between 110 and 250 °C, preferably 130-180 °C, preferably at pressures between 0.1 and 7 MPa, preferably 0.3-6 MPa, preferably providing a specific energy of more than 0.1 kWh/kg during said extrusion.

Destructuring of the starch preferably occurs in the presence of 1-40% by weight relative to the weight of the starch of one or more plasticisers chosen from water and polyols having from 2 to 22 carbon atoms. As for the water, this may also be the water naturally present in the starch. Among the polyols, preferred ones are polyols having from 1 to 20 hydroxyl groups containing from 2 to 6 carbon atoms, their ethers, thioethers and organic and inorganic esters. Examples of polyols are glycerol, diglycerol, polyglycerol, pentaerythritol, ethoxylated polyglycerol, ethylene glycol, polyethylene glycol, 1,2-propanediol, 1,3-propanediol, 1,4-butanediol, neopentylglycol, sorbitol monoacetate, sorbitol oxide monoacetate, sorbitol oxorbate diethoxylated sorbitol and mixtures thereof. In a preferred embodiment, the starch is destructured in the presence of glycerol or a mixture of plasticisers comprising glycerol, more preferably containing between 2 and 90% by weight of glycerol. Preferably the deconstructed and cross-linked starch according to the present invention comprises from 1 to 40% by weight of plasticisers relative to the weight of starch. When starch is present in the composition of layer B, it is preferably in the form of particles having a circular or elliptical cross-section or otherwise an ellipse-like cross-section having an arithmetic mean diameter of less than 1 micron, and more preferably having a mean diameter of less than 0.5 µm, measured along the major axis of the particle.

The composition of layer B comprises 0 - 40% by weight, preferably 2 - 30% by weight, in relation to the sum of components vi.-x., of at least one polyhydroxyalkanoate (component viii.), preferably chosen from the group consisting of polyesters of lactic acid, polycaprolactone, polyhydroxybutyrate, polyhydroxybutyrate-valerate, polyhydroxybutyrate-propanoate, polyhydroxybutyrate-hexanoate, polyhydroxybutyrate-decanoate, polyhydroxybutyrate-propanoate, polyhydroxybutyrate-hexanoate, polyhydroxybutyrate-decanoate, polyhydroxybutyrate-propanoate, polyhydroxybutyrate-hexanoate, polyhydroxybutyrate-decanoate, polyhydroxybutyrate-polyhydroxybutyrate-3-polyhydroxybutyrate-hexanoate-dodecanoate-hydroxydrate-polyhydroxybutyrate-3-hydroxybutyrate. Preferably said polyhydroxyalkanoate comprises at least 80% by weight of one or more polyesters of lactic acid.

In a preferred embodiment the lactic acid polyesters are selected from the group comprising poly-L-lactic acid, poly-D-lactic acid, poly-DL-lactic acid stereo complex, copolymers comprising more than 50% in moles of said lactic acid polyesters or mixtures thereof. Particularly preferred are lactic acid polyesters containing at least 95% by weight of repeating units derived from L-lactic or D-lactic acid or combinations thereof, having a molecular weight Mw greater than 50,000 and a shear viscosity of between 50 and 500 Pa.s, preferably 100-300 Pa.s (measured according to ASTM standard D3835 at T = 190°C, shear rate = 1000 s-1, D = 1 mm, L / D = 10).

In a particularly preferred embodiment of the invention the lactic acid polyester comprises at least 95% by weight of units derived from L-lactic acid, <5% repetitive units derived from D-lactic acid, has a melting point in the range 135-180°C, a glass transition temperature (Tg) in the range 55-65°C and an MFR (measured according to ISO 1133-1 at 190°C and 2.16 kg) in the range 1-50 g/10 minutes. Commercial examples of lactic acid polyesters having these properties include, for example, Ingeo^{™} 4043D, 3250D and 6202D biopolymer products. In the composition of layer B there is 0 - 15% by weight, preferably 0 - 10% by weight, in relation to the sum of components vi.-x., of at least one inorganic filler (component ix.), which is preferably chosen from kaolin, barytes, clay, talc, calcium and magnesium, iron and lead carbonates, aluminium hydroxide, kieselguhr, aluminium sulfate, barium sulfate, silica, mica, titanium dioxide, wollastonite.

In a preferred embodiment of the present invention, the inorganic filler in the composition of layer B comprises talc, calcium carbonate or mixtures thereof, present in the form of particles having an arithmetic mean diameter of less than 10 microns measured along the major axis of the particles.

Also present in the composition of layer B is 0 to 5% by weight, preferably 0 to 0.5% by weight, relative to the sum of the components vi.-x., of at least one crosslinking agent and/or chain extender (component x.) to improve stability to hydrolysis.

Said crosslinking agent and/or chain extender is selected from di- and/or polyfunctional compounds bearing isocyanate, peroxide, carbodiimide, isocyanurate, oxazoline, epoxy, anhydride or divinylether groups or mixtures thereof.

Particularly preferred are mixtures of di- and/or polyfunctional compounds bearing isocyanate groups with di- and/or polyfunctional compounds bearing epoxy groups, even more preferably comprising at least 75% by weight of di- and/or polyfunctional compounds bearing isocyanate groups.

Compounds having two and multifunctional groups including isocyanate groups are preferably selected from p-phenylene diisocyanate, 2,4-toluene diisocyanate, 2,6-toluene diisocyanate, 4,4-diphenylmethane-diisocyanate, 1,3-phenylene-4-chloro diisocyanate, 1,5-naphthalene diisocyanate, 4,4-diphenylene diisocyanate, 3,3'-dimethyl-4,4-diphenylmethane diisocyanate, 3-methyl-4,4'-diphenylmethane diisocyanate, diphenylester diisocyanate, 2,4-cyclohexane diisocyanate, 2,3-cyclohexane diisocyanate, 1-methyl 2,4-cyclohexyl diisocyanate, 1-methyl 2,6-cyclohexyl diisocyanate, bis-(isocyanate cyclohexyl) methane, 2,4,6-toluene triisocyanate, 2,4,4-diphenylether triisocyanate, polymethylene-polyphenyl-polyisocyanates, methylene diphenyl diisocyanate, triphenylmethane triisocyanate, 3,3'ditolylene-4,4-diisocyanate, 4,4'-methylene bis(2-methyl-phenyl isocyanate), hexamethylene 1,3-cyclohexylene diisocyanate, 1,2-cyclohexylene diisocyanate and mixtures thereof. In a preferred embodiment the compound containing isocyanate groups is 4,4-diphenylmethane-diisocyanate.

As for di- and polyfunctional compounds bearing peroxide groups, these are preferably selected from benzoyl peroxide, lauroyl peroxide, isononanoyl peroxide, di(t-butylperoxyisopropyl) benzene, t-butyl peroxide, dicumyl peroxide, alpha,alpha-di(t-butylperoxy) diisopropylbenzene, 2,5-dimethyl-2,5-di(t-butylperoxy) hexane, t-butylcumyl peroxide, di-t-butyl peroxide, 2,5-dimethyl-2,5-di(t-butylperoxy) hex-3-ynine, di(4-t-butylcyclohexyl) peroxy dicarbonate dicetyl peroxydicarbonate, dimyristyl peroxydicarbonate, 3,6,9-triethyl-3,6,9-trimethyl-1,4,7-triperoxonane, di(2-ethylhexyl) peroxydicarbonate and mixtures thereof.

The di- and polyfunctional compounds bearing carbodiimide groups preferably used in the composition according to the present invention are chosen from poly(cyclooctylene carbodiimide), poly(1,4-dimethylenclohexylene carbodiimide), poly(cyclohexylene carbodiimide), poly(ethylene carbodiimide), poly(butylene carbodiimide), poly(isobutylene carbodiimide), poly(nonylene carbodiimide), poly(dodecylene carbodiimide), poly(neopentylene carbodiimide), poly(1,4-dimethylene phenylene carbodiimide), poly(2,2',6,6'-tetraisopropyldiphenylene carbodiimide) (Stabaxol <^{®}> D), poly(2,4,6-triisopropyl-1,3-phenylene carbodiimide) (Stabaxol <^{®}> P- 100), poly(2,6-diisopropyl-1,3-phenylene carbodiimide) (Stabaxol <^{®}> P), poly(tolyl carbodiimide), poly(4,4'-diphenylmethane carbodiimide), poly(3,3'-dimethyl-4,4'-biphenylene carbodiimide), poly(p-phenylene carbodiimide), poly(m-phenylene carbodiimide), poly(3,3'-dimethyl-4,4'-diphenylmethane carbodiimide), poly(naphthylene carbodiimide), poly (isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12-dodecamethylene bis(ethylcarbodiimide) and mixtures thereof.

Examples of di- and polyfunctional compounds bearing epoxide groups which may be advantageously used in the composition according to the present invention are all polyepoxides from epoxidised oils and/or from styrene-glycidyl ether-methyl methacrylate or glycidyl ether-methyl methacrylate, included in a range of molecular weights between 1000 and 10,000 and having an epoxy number per molecule between 1 and 30 and preferably between 5 and 25, the epoxides selected from the group comprising: diethylene glycol diglycidyl ether, polyethylene glycol diglycidyl ether, polyglycerol polyglycidyl ether, 2-epoxybutane, polyglycerol polyglycidyl ether, isoprene diepoxide and cycloaliphatic diepoxides, 1,4-cyclohexanedimethanol diglycidyl ether, glycidyl 2-methylphenyl ether, propoxylatotriglycidyl ether, propoxylatotriglycidyl ether, tetraglycidyl ethers of metaxylenediamine and diglycidyl ether of bisphenol A and mixtures thereof.

Along with di- and polyfunctional compounds bearing isocyanate, peroxide, carbodiimide, isocyanurate, oxazoline, epoxy, anhydride and divinylether groups such as those described above, catalysts may also be used to increase the reactivity of the reactive groups. In the case of polyepoxides, fatty acid salts, even more preferably calcium stearates and zinc stearates may be used.

In a particularly preferred embodiment of the invention, the crosslinking agent and/or chain extender comprises compounds bearing isocyanate groups, preferably 4,4-diphenylmethane-diisocyanate, and/or bearing carbodiimide groups, and/or bearing epoxide groups, preferably of the styrene-glycidylteremethylmethacrylate type.

In layer B, in addition to components vi.-x. mentioned above, one or more other components may advantageously also be present. In this case, layer B comprising a composition comprising components vi.-x. is preferably one or more polymers which are not the same as components vi., vii. and viii., of synthetic or natural origin, which may or may not be biodegradable, together with possibly one or more other components.

As for the polymers which may be added to the composition of layer B which are not the same as components vi., vii. and viii., of synthetic or natural origin, which may or may not be biodegradable, they are advantageously chosen from the group comprising vinyl polymers, diacid polyesters which are not the same as polyester vi., polyamides, polyurethanes, polyethers, polyureas, polycarbonates and mixtures thereof.

Among vinyl polymers those preferred are polyethylene, polypropylene, their copolymers, polyvinyl alcohol, polyvinyl acetate, polyethylvinyl acetate and polyethylene vinyl alcohol, polystyrene, chlorinated vinyl polymers, polyacrylates.

Among the chlorinated vinyl polymers, those to be included here, in addition to polyvinyl chloride, are polyvinylidene chloride, poly(vinyl chloride-vinyl acetate), poly(vinyl chloride-ethylene), poly(vinyl chloride-ethylene), poly(vinyl chloride-propylene), poly(vinyl chloride-styrene), poly(vinyl chloride-isobutylene) and copolymers in which polyvinyl chloride accounts for more than 50% in moles. Said polymers may be random, block or alternating copolymers.

With regard to the polyamides in the composition according to the present invention, these are preferably chosen from the group comprising polyamide 6 and 6,6, polyamide 9 and 9,9, polyamide 10 and 10,10, polyamide 11 and 11,11, polyamide 12 and 12,12 and combinations thereof of the types 6/9, 6/10, 6/11 and 6/12, blends thereof and copolymers both random and block. Preferably the polycarbonates of the composition according to the present invention are chosen from the group comprising polyalkylene carbonates, more preferably polyethylene carbonates, polypropylene carbonates, polybutylene carbonates, mixtures thereof and both random and block copolymers.

Among the polyethers, those preferred are those selected from the group consisting of polyethylene glycols, polypropylene glycols, polybutylene glycols, copolymers thereof and mixtures thereof having molecular weights from 70,000 to 500,000.

With regard to diol polyesters which are not the same as polyester vi. in layer B, these preferably comprise:
(g) a dicarboxylic component comprising, in relation to the total dicarboxylic component:
   (g1) 20-100% in moles of units derived from at least one aromatic dicarboxylic acid,
   (g2) 0-80% in moles of units derived from at least one saturated aliphatic dicarboxylic acid,
   (g3) 0-5% in moles of units derived from at least one unsaturated aliphatic dicarboxylic acid;
(h) a diol component comprising, in relation to the total diol component:
   (h1) 95-100% in moles of units derived from at least one saturated aliphatic diol;
   (h2) 0-5% in moles of units derived from at least one unsaturated aliphatic diol.

Preferably the g1 aromatic dicarboxylic acids, g2 saturated aliphatic dicarboxylic acids, g3 unsaturated aliphatic dicarboxylic acids, h1 saturated aliphatic diols and h2 unsaturated aliphatic diols for said polyesters are chosen from those described above for polyester vi. in layer B according to the present invention.

In addition to the above components, the composition in layer B preferably further comprises at least one other component chosen from the group consisting of plasticisers, UV stabilisers, lubricants, nucleating agents, surfactants, antistatic agents, pigments, flame retardant agents, compatibilising agents, lignin, organic acids, antioxidants, anti-mould agents, waxes, process aids and polymer components preferably chosen from the group consisting of vinyl polymers, diol diacid polyesters which are not the aliphatic-aromatic polyesters described above, polyamides, polyurethanes, polyethers, polyureas or polycarbonates.

With regard to plasticisers, in addition to the plasticisers preferably used for the preparation of the de-structured starch described above, there are preferably present in the composition of layer B according to the present invention one or more plasticisers chosen from the group consisting of phthalates, such as for example diisononyl phthalate, trimellitates, such as for example trimellitic acid esters with C4-C20 mono-alcohols preferably chosen from the group consisting of n-octanol and n-decanol, and aliphatic esters having the following structure: R1-O- C (O) -R4-C (O) - [- O-R2-0-C (O) -R5-C (O) -] m-O-R3 in which:
R1 is selected from one or more groups comprising H, saturated and unsaturated linear and branched alkyl residues of the C1-C24 type, polyol residues esterified with C1-C24 monocarboxylic acids;
R2 comprises -CH2-C (CH3) 2-CH2- and C2-Cg alkylene groups and comprises at least 50% in moles of said -CH2-C (CH3)2-CH2- groups;
R3 is selected from one or more groups comprising H, saturated and unsaturated linear and branched alkyl residues of the C1-C24 type, polyol residues esterified with C1-C24 monocarboxylic acids;
R4 and R5 are the same or different, comprise one or more C2-C22, preferably C2-Cn, more preferably C4-C9, alkylenes, and comprise at least 50% in moles of C7 alkylenes.
m is a number between 1 and 20, preferably 2-10, more preferably 3-7. Preferably, in said esters at least one of the Ri and/or R3 groups comprises, preferably in an amount >10% in moles, more preferably >20%, even more preferably >25% in moles in relation to the total amount of Ri and/or R3 groups, polyol residues esterified with at least one C1-C24 monocarboxylic acid chosen from the group consisting of stearic acid, palmitic acid, 9-ketostearic acid, 10-ketostearic acid and mixtures thereof. Examples of such aliphatic esters are described in Italian patent application MI2014A000030 and patent applications PCT / EP2015 / 050336, PCT / EP2015 / 050338.

When present in layer B, the selected plasticisers are preferably present up to 10% by weight of the total weight of the composition of layer B itself.

Preferably, the lubricants are chosen from esters and metal salts of fatty acids such as, for example, zinc stearate, calcium stearate, aluminium stearate and acetyl stearate. Preferably, the composition of layer B according to the present invention comprises up to 1% by weight of lubricants, more preferably up to 0.5% by weight relative to the total weight of the composition of layer B.

Examples of nucleating agents include saccharin sodium salt, calcium silicate, sodium benzoate, calcium titanate, boron nitride, isotactic polypropylene or low molecular weight PLA. These additives are preferably added in amounts of up to 10% by weight and more preferably between 2 and 6% by weight relative to the total weight of the composition. If necessary, pigments may also be added, for example titanium dioxide, clays, copper phthalocyanine, silicates, iron oxide and hydroxides, carbon black and magnesium oxide. These additives are preferably added up to 10% by weight.

Preferably, the multilayer film according to the present invention is characterised by a ratio of carbon of renewable origin in relation to total organic carbon content (percentage of renewable) measured according to ASTM D6866 of more than 15%, preferably more than 40%, more preferably more than 50%, even more preferably more than 60%. According to the present invention, products that can be considered to be of renewable origin are those obtained from sources which, by their very nature, are regenerable and inexhaustible over a human lifetime and whose use consequently does not adversely affect the availability of natural resources for future generations. Examples of monomers of renewable origin are sebacic acid, succinic acid, 2,5-furandicarboxylic acid, azelaic acid, 1,4-butanediol.

The multilayer film according to the present invention comprises at least one layer A and at least one layer B, preferably characterised by a mutual relationship chosen between A / B and A / B / A, in which layer A and layer B are different from each other. The multilayer film according to the present invention may advantageously comprise one or more layers A and one or more layers B, as well as further layers, such as, for example, tie-layers or barrier layers, or metal films. In the multilayer film according to the present invention, the ratio of the total number of layers A to the total number of layers B is between 0.05 and 1.2. Preferably, in the multilayer film according to the present invention the ratio of the totality of layers A to the totality of layers B is between 0.1 and 0.6. The multilayer film according to the present invention has a type A / B and preferably A / B / A arrangement of the layers, having a total thickness in which the sum of the thicknesses of layers A is less than the thickness of layers B, preferably less than B/2, and more preferably less than B/3.

The multilayer film according to the present invention advantageously has a total thickness of less than 50 microns, more preferably less than 15 microns, even more preferably less than 13 microns.

The thickness of the layers may advantageously be measured using an electron microscope on the fracture surface in liquid nitrogen.

Additional layers, arranged in an intermediate position in relation to layers A and B (arrangement A / C / B, where C is an additional layer) or a non-intermediate position (arrangement A / B /C or C / A / B, where C is an additional layer) may also be present in any event.

The multilayer film according to the present invention may be produced according to any of the processes known in the art, through, for example, a coextrusion process, coating/coating or laminating process. In a preferred embodiment, the multilayer film according to the present invention may be obtained by a coextrusion process, preferably associated with a bubble film-forming process.

The specific equipment and process conditions for producing multilayer film according to the present invention, for example for co-extrusion and film formation, depend on the composition and number of layers in which the multilayer film is to be produced. Through the specific combination of components and layers, the multilayer film according to the present invention has the characteristic of offering an excellent balance between high-level biodegradation properties, mechanical properties, and appreciable optical transparency properties. This makes it particularly suitable for the production of a wide range of articles such as, for example, packaging of various kinds, in particular bags for the transport of goods and bags for food packaging such as bags for fruit and vegetables comprising said multilayer film. It is also particularly suitable for mulching sheets.

With regard to optical properties (with reference to a film having a thickness of less than 13 microns), optical transmission values greater than 90%, more preferably greater than 91%, Haze (haziness) values less than 65%, more preferably less than 55%, even more preferably less than 45% and Clarity (sharpness) values greater than 20%, more preferably greater than 40%, even more preferably greater than 55% (measured according to ASTM D1003), which enable the multilayer film according to the present invention to be particularly suitable for the above-mentioned applications, are particularly preferred.

The multilayer film according to the present invention is able to disintegrate under home composting conditions according to UNI 11355. Preferably, said multilayer film is able to disintegrate under home composting conditions according to UNI 11355 when characterised by a total thickness of less than 15 microns, preferably less than 13 microns.

The present invention will now be illustrated on the basis of a number of examples which are not intended to be limiting.

### EXAMPLES

Component i: poly(butylene adipate-co-butylene terephthalate) having a content of 47.3% in moles of terephthalic acid in relation to the sum of the total dicarboxylic acids, MFR 4.8g/10min (@ 190 °C, 2.16 kg) and acidity 37 meq/kg.

Component ii-1: poly(butylene succinate-co-butylene azelate) containing 25% moles of azelaic acid in relation to the sum of succinic acid and azelaic acid, MFR 5.9g/10min (@ 90°C, 2.16 kg) and acidity 46 meq/kg.

Component ii-2: poly(butylene succinate-co-butylene azelate) containing 20% moles of azelaic acid in relation to the sum of succinic acid and azelaic acid, MFR 5.0g/10min (@ 190°C, 2.16 kg) and acidity 50 meq/kg.

Component iii: polylactic acid ("PLA") Ingeo 3251D, MFR 41 g/10min (@ 190 °C, 2.16 kg).

Component v: styrene-alkylacrylate-glycidylmethacrylate-based random copolymer with Mw 6800 and epoxy number per molecule of 10.

Component vi: poly(butylene adipate-co-butylene azelate-co-butylene terephthalate), containing 15% moles of azelaic acid in relation to the sum of adipic acid and azelaic acid, containing 47.6% moles of terephthalic acid in relation to the sum of total dicarboxylic acids, MFR 4.4g/10min (@ 190°C, 2.16 kg) and acidity 39 meq/kg.

Component vii: native corn starch and plasticiser (76.4% by weight native corn starch, 13.9% by weight polyglycerol and 9.7% added water).

Component viii: polylactic acid ("PLA") Ingeo 4043D, MFR 2.5 g/10min (@ 190°C, 2.16 kg).

Component x: styrene-alkylacrylate-glycidylmethacrylate-based random copolymer with Mw 1400 and epoxy number per molecule equal to 33.

### EXAMPLE 1 - Three layer film with arrangement A / B / A

Preparation of Composition A (layer A): the compositions described in Table 1 were fed to a twin-screw extruder mod. OMC EBV60/36, operating under the following conditions:
   Screw diameter (D) = 58 mm;
   LID = 36;
   Screw rotation speed = 140 rpm;
   Temperature profile = 60-150-180-210x4-150x2 °C;
   Capacity: 40 kg/h;
   Vacuum degassing in zone 8 of 10.
Preparation of Composition B (layer B): the compositions described in Table 1 were fed to a twin-screw extruder mod. OMC EBV60/36, operating under the following conditions:
   Screw diameter (D) = 58 mm;
   LID = 36;
   Screw rotation speed = 160 rpm;
   Temperature profile = 60-150-180-210x4-150x2 °C;
   Capacity: 46 kg/h;
   Vacuum degassing in zone 8 out of 10

Composition A and Composition B (Table 1) were then fed simultaneously to a co-extruder to form a three-layer blown film having an A/B/A arrangement. For this purpose, Composition A was fed at a flow rate of 3 kg/h to a first extruder having a screw diameter of 35 mm with an LID of 30 operating at 10 rpm with a thermal profile of 100-170x4 and at a flow rate of 3 kg/h to a second extruder characterised by a screw diameter of 35 mm with an LID of 30 operating at 10 rpm with a thermal profile of 100-170x4. Composition B was fed at 24 kg/h to an extruder with a 40 mm screw diameter with an LID of 30 operating at 72 rpm with a thermal profile 80-145x4. Both compositions, once melted, were coupled in a coextrusion-blowing head with an air gap of 0.9 mm and LID 9 set at 170°C, feeding the multilayer structure to a film-forming process operating with a blowing ratio of 4.5 and a stretch ratio of 16.8.

The resulting film (total 12 microns, 20% layer A, equally divided between the two layers, 80% layer B) was then characterised in terms of disintegration properties (Table 2), mechanical properties (Table 3) and optical properties (Table 4).

### EXAMPLE 2 - Three layer film with arrangement A / B/ A

Preparation of composition A (layer A) and composition B (layer B): were fed to a twin-screw extruder mod. OMC EBV60/36, operating under the operating conditions reported for composition A and composition B in example 1.

Composition A and Composition B (Table 1) were then fed simultaneously to a co-extruder to form a three-layer blown film having an A/B/A arrangement. For this purpose, Composition A was fed at a flow rate of 3.2 kg/h to a first extruder having a screw diameter of 35 mm with an LID of 30 operating at 11 rpm with a thermal profile of 100-170x4 and at a flow rate of 3.1 kg/h to a second extruder characterised by a screw diameter of 35 mm with an LID of 30 operating at 10 rpm with a thermal profile of 100-170x4. Composition B was fed at 23.7 kg/h to an extruder with a 40 mm screw diameter with an LID of 30 operating at 70 rpm with a thermal profile 80-145x4. Both compositions, once melted, were coupled in a coextrusion-blowing head with an air gap of 0.9 mm and LID 9 set at 170 °C, feeding the multilayer structure to a film-forming process operating with a blowing ratio of 4.5 and a stretch ratio of 15.6.

The resulting film (total 13 microns, 20% layer A, equally divided between the two layers, 80% layer B) was then characterised in terms of disintegration properties (Table 2), mechanical properties (Table 3) and optical properties (Table 4).

### EXAMPLE 3 (comparative) Three-layer film with arrangement A/B/A

Preparation of composition A (layer A) and composition B (layer B): these were fed to a twin-screw extruder mod. OMC EBV60/36, operating under the operating conditions reported for composition A and composition B in example 1.

Composition A and Composition B (Table 1) were then fed simultaneously to a co-extruder to form a three-layer blown film having an A/B/A arrangement. For this purpose, Composition A was fed at a flow rate of 3 kg/h to a first extruder having a screw diameter of 35 mm with an LID of 30 operating at 10 rpm with a thermal profile 100-170x4 and at a flow rate of 3.2 kg/h to a second extruder characterised by a screw diameter of 35 mm with an LID of 30 operating at 12 rpm with a thermal profile 100-170x4. Composition B was fed at 23.8 kg/h to an extruder with a 40 mm screw diameter with a LID of 30 operating at 73 rpm with a thermal profile 80-145x4. Both compositions, once melted, were coupled in a coextrusion-blowing head with an air gap of 0.9 mm and L/D 9 set at 170°C, feeding the multilayer structure to a film-forming process operating with a blowing ratio of 4.5 and a stretch ratio of 16.8.

The resulting film (total 12 microns, 20% layer A, equally divided between the two layers, 80% layer B) was then characterised in terms of disintegration properties (Table 2), mechanical properties (Table 3) and optical properties (Table 4).

**Table 1 Composition of mixtures (% by weight)**

| | Layer A | | | | |
|---|---|---|---|---|---|
| | i | ii-1 | ii-2 | iii | v |
| Example 1 | 76.0 | 4.8 | - | 19.0 | 0.2 |
| Example 2 | 72.6 | - | 9.1 | 18.1 | 0.2 |
| Comparison 1 | 79.8 | - | - | 20.0 | 0.2 |

**Table 2 Results for disintegration characteristics under home composting conditions (UNI 11355)**

| | Layer B | | | |
|---|---|---|---|---|
| | | vii | viii | x |
| Example 1 | 60.9 | 36.0 | 2.9 | 0.2 |
| Example 2 | 60.9 | 36.0 | 2.9 | 0.2 |
| Comparison 1 | 60.9 | 36.0 | 2.9 | 0.2 |

Disintegration under home composting conditions was conducted according to standard UNI 11355 App. A *"Biodegradable plastic articles in home composting* - *Requirements and test methods".*

The degree of disintegration of the films was determined by placing the samples in slides of size approximately 50x50 mm. The slides were placed on top of a first layer of waste of about 4 cm and then covered by a second layer of waste of about 2 cm. The waste consisted of 98% compost, 1% starch and 1% feed. Disintegration was followed qualitatively (visual observation and photos).

**Table 3 Results for mechanical properties and tear strength**

| | Test days in which complete disintegration occurred |
|---|---|
| Example 1 | 153 |
| Example 2 | 154 |
| Comparison 1 | 179 |

**Table 4 Results for optical properties**

| | FILM TRACTION ASTM D822 (23°C 55%RH - Vo 50 mm/min) | | | Elmendorf tear ASTM D1922 (23 °C - 55%RH) | |
|---|---|---|---|---|---|
| | b (MPa) | b (%) | E (MPa) | MD force (N/mm) | TD force (N/mm) |
| Example 1 | 26 | 423 | 361 | 103 | 103 |
| Example 2 | 25 | 425 | 340 | 144 | 60 |
| Comparison 1 | 27 | 445 | 346 | 93 | 83 |

| | OPTICAL PROPERTIES ASTM D1003 | | |
|---|---|---|---|
| | TRANSM. % | HAZE% | CLARITY% |
| Example 1 | 92 | 23 | 74 |
| Example 2 | 89 | 53 | 47 |
| Comparison 1 | 92 | 24 | 74 |

## Claims

1. Multilayer film comprising at least a first layer A and at least a second layer B, wherein the layer A comprises:
i) 97 - 60% by weight, with respect to the sum of the i)-v) components, of at least one aliphatic-aromatic polyester which comprises:
a) a dicarboxylic component comprising, with respect to the total of the dicarboxylic component:
a1) 30-70% by moles, preferably 40-60% by moles, of units deriving from at least one aromatic dicarboxylic acid;
a2) 70-30% by moles, preferably 60-40% by moles, of units deriving from at least one saturated aliphatic dicarboxylic acid;
a3) 0-5% by moles of units deriving from at least one unsaturated aliphatic dicarboxylic acid;
b) a diol component comprising, with respect to the total diol component:
b1) 95-100% by moles of units deriving from at least one saturated aliphatic diol;
b2) 0-5% by moles of units deriving from at least one unsaturated aliphatic diol;
ii) 3 - 40% by weight, with respect to the sum of the i)-v) components, of at least one aliphatic polyester which includes:
c) a dicarboxylic component comprising with respect to the total of the dicarboxylic component:
c1) 70-97% by moles of units deriving from succinic acid;
c2) 3-30% by moles of units deriving from at least one saturated dicarboxylic acid other than succinic acid;
d) a diol component comprising, with respect to the total diol component:
d1) 95-100% by moles of units deriving from at least one saturated aliphatic diol;
d2) 0-5% by moles of units deriving from at least one unsaturated aliphatic diol;
iii) 0 - 37% by weight, with respect to the sum of the i)-v) components, of at least one polyhydroxyalkanoate;
iv) 0 - 10% by weight, with respect to the sum of the i)-v) components, of at least one inorganic filling agent;
v) 0 - 5% by weight, with respect to the sum of the i)-v) components, of at least one crosslinking agent and/or a chain extender comprising at least one di- and/or polyfunctional compound bearing groups selected from isocyanate, peroxide, carbodiimide, isocyanurate, oxazoline, epoxide, anhydride, divinylether and mixtures thereof;
with the proviso that if component iii) is 0 the component iv) must be greater than 0, preferably between 0.1 and 8%, even more preferably between 3 and 5% and component i) must be comprised between 96,9% and 60% with respect to the i)-v) components;
and in which layer B comprises:
vi) 99.9 - 50% by weight, with respect to the sum of the components vi)-x), of at least one aliphatic-aromatic polyester comprising:
e) a dicarboxylic component comprising, with respect to the total of the dicarboxylic component:
e1) 30-70% by moles of units deriving from at least one aromatic dicarboxylic acid;
e2) 70-30% by moles of units deriving from at least one saturated aliphatic dicarboxylic acid;
e3) 0-5% by moles of units deriving from at least one unsaturated aliphatic dicarboxylic acid;
f) a diol component comprising, with respect to the total diol component:
f1) 95-100% by moles of units deriving from at least one saturated aliphatic diol;
f2) 0-5% by moles of units deriving from at least one unsaturated aliphatic diol;
vii) 0.1 - 50% by weight with respect to the sum of the components vi)-x), of at least one polymer of natural origin;
viii) 0 - 40% by weight with respect to the sum of the components vi)-x), of at least one polyhydroxyalkanoate;
ix) 0 - 15% by weight with respect to the sum of the components vi)-x), of at least one inorganic filling agent;
x) 0 - 5% by weight, with respect to the sum of the components vi)-x), of at least one crosslinking agent and/or a chain extender comprising at least one di- and/or polyfunctional compound bearing groups selected from isocyanate, peroxide, carbodiimide, isocyanurate, oxazoline, epoxide, anhydride, divinyl ether and mixtures thereof;
further comprising at least one additional layer.

2. Multilayer film according to claim 1, wherein said additional layer is selected from: tie-layers, barrier layers and metal films.

3. Multilayer film according to any of claims 1-2, wherein said additional layer is a layer C and is arranged in an intermediate position A/C/B in relation to layers A and B.

4. Multilayer film according to any of claims 1-2, wherein said additional layer is a layer C and is arranged in a non-intermediate position C/A/B or C/A/B in relation to layers A and B.

5. Multilayer film according to claim 1 wherein the aromatic dicarboxylic acids in component a1) are preferably selected from aromatic dicarboxylic acids of the phthalic acid type, preferably terephthalic acid or isophthalic acid, more preferably terephthalic acid and heterocyclic dicarboxylic aromatic compounds, preferably 2,5-furandicarboxylic acid, 2,4-furandicarboxylic acid, 2,3 -furandicarboxylic acid, 3,4-furandicarboxylic acid, more preferably 2,5-furandicarboxylic acid, their esters, salts and mixtures.

6. Multilayer film according to any one of the preceding claims in which the saturated aliphatic dicarboxylic acids in component a2) are preferably selected from saturated C2-C24, preferably C4-C13, more preferably C4-C11 dicarboxylic acids, their C1-C24, preferably C1-C4, alkyl esters, their salts and their mixtures.

7. Multilayer film according to claim 6 wherein the saturated aliphatic dicarboxylic acids are selected from succinic acid, 2-ethylsuccinic acid, glutaric acid, 2 -methylglutaric acid, adipic acid, pimelic acid, suberic acid, azelaic acid, sebacic acid, undecanedioic acid, dodecanedioic acid, brassylic acid, acid, octadecanedioic acid and their C1-C24 alkyl esters.

8. A multilayer film according to claim 7 wherein the saturated aliphatic dicarboxylic acid comprises mixtures comprising at least 50% in moles, preferably more than 60% in moles, more preferably more than 65% in moles, of succinic acid, adipic acid, azelaic acid, sebacic acid, brassylic acid, their C1 -C24 alkyl esters, preferably C1-C4, their salts and mixtures thereof.

9. Multilayer film according to any one of the preceding claims in which the saturated aliphatic dicarboxylic acids other than succinic acid in component c2) are preferably selected from the saturated dicarboxylic acids C5-C24, preferably C5-C13, more preferably C7-C11, their C1-C24 alkyl esters, preferably C1-C4, their salts and mixtures thereof.

10. Multilayer film according to claim 9 wherein the saturated aliphatic dicarboxylic acids are selected from 2-ethylsuccinic acid, glutaric acid, 2-methylglutaric acid, adipic acid, pimelic acid, suberic acid, azelaic acid, sebacic acid, undecanendioic acid, dodecanedioic acid, brassylic acid, and their C1 -24 alkyl esters.

11. Multilayer film according to claim 10 in which the component c2) is azelaic acid.

12. Multilayer film according to any one of the preceding claims wherein component iii) of layer A comprises a polyhydroxyalkanoate between 5 and 37%, with respect to the sum of the components i)-v).

13. Multilayer film according to any one of the preceding claims wherein component iv) of layer A is present between 0.1 and 8%, even more preferably between 3 and 5% with respect to the sum of the components i)-v).

14. Multilayer film according to any one of the preceding claims wherein component v) is present between 0.1 and 0.5 with respect to the sum of the i.-v. components.

15. Multilayer film according to any one of the preceding claims, in which in layer B the aromatic dicarboxylic acids in component e1) are preferably selected from aromatic dicarboxylic acids of the phthalic acid type, preferably terephthalic acid or isophthalic acid, more preferably terephthalic acid and heterocyclic dicarboxylic aromatic compounds, preferably 2,5-furandicarboxylic acid, 2,4-furandicarboxylic acid, 2,3-furandicarboxylic acid, 3,4-furandicarboxylic acid, more preferably 2,5-furandicarboxylic acid, their esters, salts and mixtures.

16. Multilayer film according to any one of the preceding claims, wherein in layer B the saturated aliphatic dicarboxylic acids in component e2) are preferably selected from saturated C2-C24, preferably C4-C13, more preferably C4-C11 dicarboxylic acids, their C1-C24 alkyl esters, preferably C1-C4, their salts and their mixtures.

17. Multilayer film according to claim 16 wherein the saturated aliphatic dicarboxylic acids are selected from succinic acid, 2-ethylsuccinic acid, glutaric acid, 2-methylglutaric acid, adipic acid, pimelic acid, suberic acid, azelaic acid, sebacic acid, undecanedioic acid, dodecanedioic acid, brassylic acid, octadecanedioic acid and their C1 -24 alkyl esters, their salts and their mixtures.

18. Multilayer film according to claim 17 wherein said mixtures consist of adipic acid and azelaic acid and contain azelaic acid in an amount comprised between 5 and 70% by moles, more preferably between 10 and 55% by moles, even more preferably between 12 and 45% by moles of azelaic acid with respect to the sum of adipic acid and azelaic acid.

19. Packaging comprising the multilayer film according to any one of the preceding claims.

20. Packaging according to claim 19 selected from bags for the transport of goods and bags for food packaging such as bags for fruit and vegetables.
